(19)

**Europäisches Patentamt**

**European Patent Office**

**Office européen des brevets**

(11) **EP 2 737 617 B1**

(12) **EUROPEAN PATENT SPECIFICATION**

(45) Date of publication and mention of the grant of the patent:
**13.06.2018 Bulletin 2018/24**

(21) Application number: **12819890.0**

(22) Date of filing: **27.07.2012**

(51) Int Cl.:
*H02M 7/217* *(2006.01)*          *H02M 3/335* *(2006.01)*

(86) International application number:
**PCT/CN2012/079294**

(87) International publication number:
**WO 2013/017050 (07.02.2013 Gazette 2013/06)**

(54) **A CONTROL IC OF A SWITCH POWER SUPPLY AND A SWITCH POWER SUPPLY USING THE SAME**

STEUERUNG EINES IC-SCHALTNETZTEILS UND SCHALTNETZTEIL DAMIT

CIRCUIT INTÉGRÉ DE COMMANDE D'UNE ALIMENTATION ÉLECTRIQUE À COMMUTATEUR ET ALIMENTATION ÉLECTRIQUE À COMMUTATEUR UTILISANT CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2011 CN 201110215457**

(43) Date of publication of application:
**04.06.2014 Bulletin 2014/23**

(73) Proprietors:
• **Shenzhen BYD Auto R&D Company Limited**
  **Shenzhen, Guangdong 518118 (CN)**
• **BYD Company Limited**
  **Shenzhen, Guangdong 518118 (CN)**

(72) Inventors:
• **WANG, Wenqing**
  **Shenzhen**
  **Guangdong 518118 (CN)**

• **YANG, Xiaohua**
  **Shenzhen**
  **Guangdong 518118 (CN)**
• **YU, Chuntian**
  **Shenzhen**
  **Guangdong 518118 (CN)**
• **FENG, Yuming**
  **Shenzhen**
  **Guangdong 518118 (CN)**

(74) Representative: **Gulde & Partner**
  **Patent- und Rechtsanwaltskanzlei mbB**
  **Wallstraße 58/59**
  **10179 Berlin (DE)**

(56) References cited:
  **WO-A2-2007/003967      CN-A- 101 924 471**
  **US-A1- 2006 092 671      US-A1- 2008 180 078**
  **US-A1- 2009 059 632      US-A1- 2010 208 500**
  **US-A1- 2010 225 293**

Description

TECHNICAL FIELD

Example embodiments of the present disclosure relate generally to an IC, and more particularly, to a control IC of a switch power supply and a switch power supply using the same.

BACKGROUND

Almost all the main power supply of the household appliance or the power supply for the control part of the household appliance need to use a low voltage direct current (DC) power supply, but considering the voltage transmission loss problem, only 220V or 110V alternating current (AC) power supply can be provided. Therefore, a high efficiency and cost-effective AC-DC converter is indispensable. The traditional AC-DC device is achieved by using a linear converter. But with the disadvantage of huge volume, heavy weight, low convert efficiency and unobvious cost advantage, the linear converter is being eliminated. And the switch power supply becomes a mainstream in the AC-DC devices. To satisfy the accuracy and the isolation safety requirement, a switch power supply with secondary feedback control is generally used.

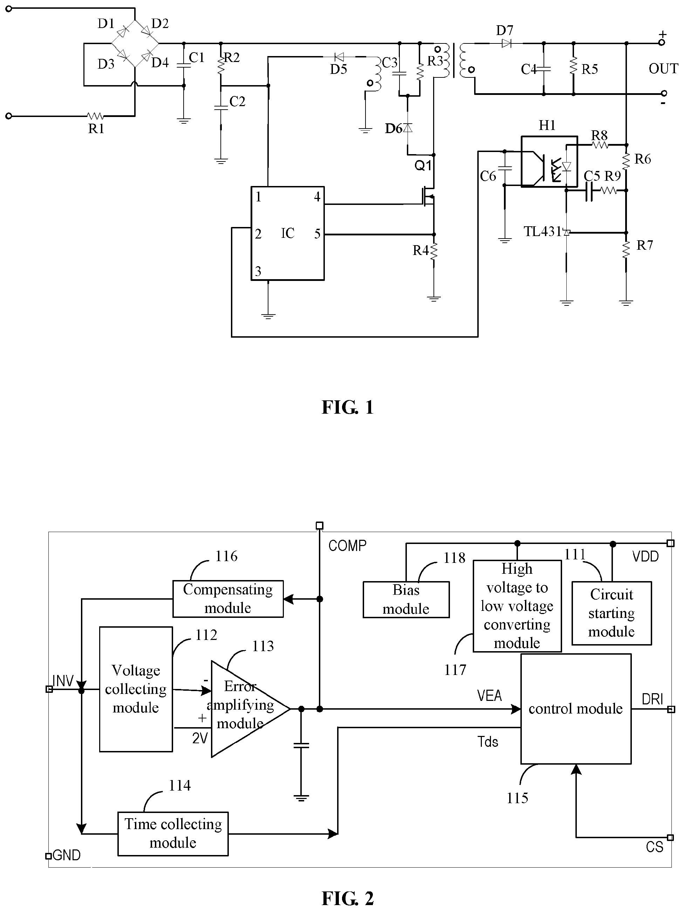

FIG. 1 shows a switch power supply circuit with feedback control in the prior art. The main AC passes through the full-wave rectifier and is converted to high voltage DC and stored in the capacitor C1. R2 and C2 provide power to the IC. The output voltage is divided by the resistor R6 and R7, then amplified by the amplifier TL431 and transmitted to the voltage sampling terminal of the IC by the optocoupler HI. The IC controls the open time and frequency of switchQ1 according to the sampled output voltage and then adjust the energy of the present cycle stored by the primary side winding, so a close loop negative feedback system is formed to maintain the value of the output voltage. But the work current of optocoupler H1 and TL431 is larger than 1 mA, the standby power consumption of the power system increases.

Patent Application Us2010/0208500 is an example of a prior art switching power converter detecting light load conditions and improving light load efficiency.

SUMMARY

According to one exemplary embodiment of the present invention, a control IC of a switch power supply is provided to decrease the standby power consumption of the power system. The control IC of a switch power supply, connected with a switch of the switch power supply, comprises: a voltage collecting module, configured to collect a feedback voltage of an output voltage of the switch power supply; an error amplifying module, configured to compare the feedback voltage and a reference voltage and output an error voltage; a time collecting module, configured to obtain a degaussing time signal according to the feedback voltage; and a control module, configured to collect a peak current feedback signal of the switch, control a frequency and duty ratio of a control signal according to the error voltage, the degaussing time signal and the peak current feedback signal, and control the switch according to the control signal, wherein the control module comprises: a collecting unit, configured to collect the peak current feedback signal of the switch;; a mode judging unit, configured to modulate a value of a judging current according to the error voltage, wherein the mode judging unit is a third current source and is configured to reduce a value of a third output current to less than a preset reference current value when the error voltage is less than the second preset voltage, and maintain the value of the third output current when the error voltage is equal to or larger than the second preset voltage;; a mode controlling unit, configured to modulate a value of a controlling current according to the error voltage, wherein the mode controlling unit comprises: a first current source, connected with the pulse width modulating unit and configured to increase a value of a first output current when the error voltage increases;;; and a second current source, connected with the frequency modulating unit and configured to decrease a value of a second output current when the error voltage decreases, stop outputting the second output current when the error voltage is equal to a first preset voltage and maintain the value of the second output current when the error voltage is less than a second preset voltage;; a reference current providing unit, configured to provide a preset reference current;; a pulse width modulating unit, configured to obtain a first comparison voltage by overlapping an output current of the mode controlling unit and the preset reference current, and output a turn-off pulse for the control signal when the first comparison voltage is equal to the value of the peak current feedback signal;; and a frequency modulating unit, configured to output a turn-on pulse for the control signal according to an output current of the mode judging unit, the output current of the mode controlling unit and the degaussing time signal, wherein the frequency modulating unit comprises: a second capacitor;;; a third capacitor;;; a second comparator;;; a first switch, of which a first terminal is connected to an output terminal of the second current source and a second terminal is connected to a terminal of the second capacitor and a negative terminal of the second comparator, configured to close or open according to the degaussing time signal;;; and a second switch, of which a first terminal is connected to an output terminal of the second current source, a second terminal is connected to a second terminal of the first switch, and a third terminal is connected to a terminal of the third capacitor and a positive terminal of the second comparator, configured to connect the first terminal and the second terminal of the second switch or to connect the first terminal and the third terminal of the second switch according to the degaussing time signal.

According to one exemplary embodiment of the present invention, switch power supply is also provided. The switch power supply comprises a control IC mentioned above; an input filter and rectification module, configured to remove an unwanted frequency from an alternating current (AC) voltage and convert the alternating current (AC) voltage to a direct current (DC) voltage; a switch; a primary side winding, configured to convert the DC voltage to an electromagnetic signal under a control of the switch; a power supply module, configured to provide a voltage to the control IC; a primary side feedback module, configured to divide the voltage of the power supply module and feedback the divided voltage to the control IC; a primary side collecting module, configured to collect the peak current feedback signal of the switch; a secondary side winding, configured to convert the electromagnetic signal to an electric signal and generate an output AC voltage; an output rectification module, configured to convert the output AC voltage to a DC voltage; a voltage regulating module, configured to store the DC voltage from the output rectification module and provide an output power to maintain the value of the output voltage when the switch is closed; and a dummy load module, configured to consume the output AC voltage from the secondary side winding in no-load situation.

The error amplifying module compares the feedback voltage and a reference voltage and output an error voltage, the load situation of the power system may be judged. The frequency and duty ratio of the control signal is controlled according to the load situation of the power system, the degaussing time signal and the peak current feedback signal, to make the power system output a constant voltage and current signal, and the work frequency of a control IC may be reduced when in the low load situation. Therefore, the switch loss of the power system is reduced and then the standby power consumption of the power system decreases.

**BRIEF DESCRIPTION OF THE DRAWINGS**

Having thus described example embodiments of the present disclosure in general terms, reference will now be made to the accompanying drawings, which are not necessarily drawn to scale, and wherein:

FIG. 1 illustrates a circuit of a switch power supply in the prior art;

FIG. 2 illustrates a block diagram of a switch power supply according to one exemplary embodiment of the present invention;

FIG. 3 illustrates a block diagram of a control module according to one exemplary embodiment of the present invention;

FIG. 4 illustrates a schematic diagram of the change trend of the IC work frequency and primary side winding current corresponding to the load according to one exemplary embodiment of the present invention;

FIG. 5 illustrates a schematic diagram method of a PWM mode according to one exemplary embodiment of the present invention;

FIG. 6 illustrates a schematic diagram method of a PFM/BURST mode according to one exemplary embodiment of the present invention;

FIG. 7 illustrates a word process diagram of a control module in PFM/BURST mode according to one exemplary embodiment of the present invention;

FIG. 8 illustrates a circuit of a switch power supply according to one exemplary embodiment of the present invention; and

FIG. 9 illustrates a circuit of a switch power supply according to one exemplary embodiment of the present invention.

**DETAILED DESCRIPTION**

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

Referring to FIG. 2, a control IC of a switch power supply is provided. The control IC is connected to a switch of the switch power supply and comprises: a voltage collecting module 112, configured to collect a feedback voltage of an output voltage of the switch power supply; an error amplifying module 113, configured to compare the feedback voltage and a reference voltage and output an error voltage; a time collecting module 114, configured to obtain a degaussing time signal according to the feedback voltage; and a control module 115, configured to collect a peak current feedback signal of the switch, control a frequency and duty ratio of a control signal according to the error voltage, the degaussing time signal and the peak current feedback signal, and control the switch according to the control signal.

The degaussing time signal Tds is obtained according to the feedback voltage, and the feedback voltage is relative to the output voltage of the switch power supply. When the switch of the switch power supply is switched on, an auxiliary winding of the switch power supply couple a primary side winding of the switch power supply and the obtained feedback voltage is a minus voltage. When the switch is switched off and a diode of the switch power supply is switched on, the output voltage of a secondary side winding of the switch power supply is the output voltage of the switch power supply, and the auxiliary winding couple the secondary side winding and the obtained feedback voltage is a plus voltage. When the switch is switched off and a diode is switched off, the feedback voltage is an oscillation voltage. So when the voltage collecting module collects the feedback voltage, the degaussing time signal is obtained. The value of the degaussing signal is equal to the turn on time of the diode.

The error amplifying module compares the feedback voltage and a reference voltage and output an error voltage, the load situation of the power system may be judged. The frequency and duty ratio of the control signal is controlled according to the load situation of the power system, the degaussing time signal and the peak current feedback signal to make the power system output a constant voltage and current signal, and the work frequency of a control IC may be reduced when in the low load situation. Therefore, the switch loss of the power system is reduced and then the standby power consumption of the power system decreases.

Referring to FIG. 2, VDD is the power terminal, GND is the ground, COMP is the compensation terminal, CS is the collecting terminal of the peak current feedback signal, INV is the collecting terminal of the feedback voltage, DRI is the driving terminal to drive the switch.

In some embodiment of the present invention, the control IC further comprises a compensating module 116, configured to compensate the feedback voltage according to the error voltage. Different voltage compensation may be achieved. The heavier is the load, the larger is the voltage compensation, which is to compensate the loss voltage that is loss in the wire.

In some embodiment of the present invention, the control IC further comprises a circuit starting module 111, configured to output an enable signal when the voltage of the circuit starting module reaches a preset start voltage and provide power to the voltage collecting module, error amplifying module, time collecting module and control module; wherein the control module further configured to receive the enable signal and output the control signal. When the control IC powers on, the circuit starting module 111 resets the other module of the control IC. When the voltage of the power supply module reaches the preset start voltage, the circuit starting module outputs the enable signal and the control IC starts to work and output the control signal, and the switch starts to work according to the control signal at the same time.

In some embodiment of the present invention, the control IC further comprises a high voltage to low voltage converting module 117, configured to provide power and a enable signal to the low voltage part of the control IC according to the output voltage of the power supply module and a reference and bias module 118, configured to provide a reference voltage and a bias voltage.

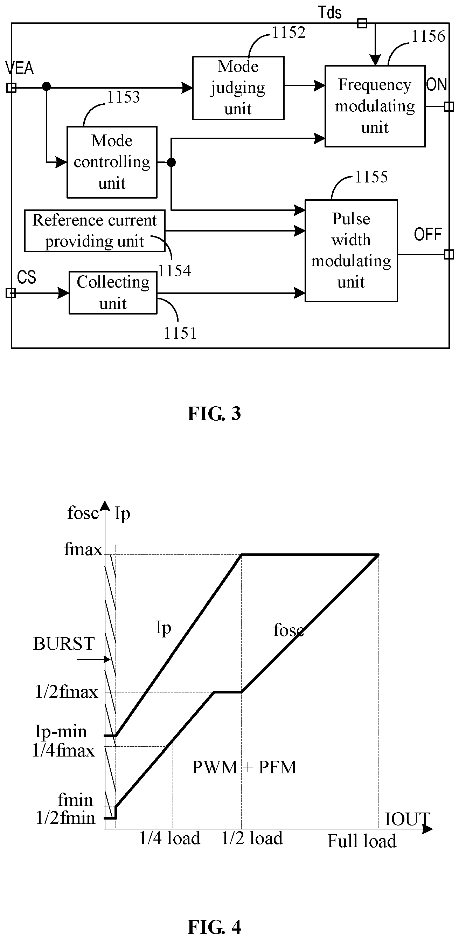

Referring to FIG. 3, the control module 115 comprises: a collecting unit 1151, configured to collect the peak current feedback signal of the switch of the switch power supply; a mode judging unit 1152, configured to modulate the value of a judging current according to the error voltage of the error amplifying module; a mode controlling unit 1153, configured to modulate the value of a controlling current according to the error voltage of the error amplifying module; a reference current providing unit 1154, configured to provide a preset reference current; a pulse width modulating unit 1155, configured to obtain a first comparison voltage VOCP by overlapping the output current of the mode controlling unit and the preset reference current of the reference current providing unit, and output a turn-off pulse OFF for the control signal when the first comparison voltage VOCP is equal to the value of the peak current feedback signal VCS; and a frequency modulating unit 1156, configured to output a turn-on pulse ON for the control signal according to the output current of the mode judging unit, the output current of the mode controlling unit and the degaussing time signal Tds.

When the pulse width modulating unit 1155 operates pulse width modulation, the control IC enters in the PWM mode; when the frequency modulating unit 1156 operates pulse frequency modulation, the control IC enters in the PFM mode; when the pulse width modulating unit 1155 operates pulse width modulation and the frequency modulating unit 1156 operates pulse frequency modulation simultaneously, the control IC enters in the BURST mode.

The output power of the switch power supply is constant, according to the formula P=UI, when the load connected the switch power supply is large, the output current I of the switch power supply increases and the output voltage U of the switch power supply deceases. The feedback voltage collected by the voltage collecting module 112 is far less than the reference voltage, and the error amplifying module 113 outputs a high level, that is the value of the output voltage VEA of the error amplifying module 113 is VDD. The mode judging unit 1152 maintains the judging current and output the judging current to the frequency modulating unit 1156, the mode controlling unit 1153 outputs a maximum current of the controlling current to the pulse width modulating unit 1155 and stops outputting current to the frequency modulating unit 1156 to maintain the peak current feedback signal. Then the peek current Ip of the primary side winding is maintained and Tds/T is maintained. According to the formula

$$Iout = 0.5 \cdot \frac{NP}{NS} \cdot \frac{Tds}{T} \cdot Ip \quad (1),$$

wherein NP is the number of turns of the primary side winding and NS is the number of turns of the secondary side winding, when the turns ratio between the primary side winding and the secondary side winding is constant, the output current Iout of the switch power supply is maintained. If the degaussing time signal Tds changes, the frequency modulating unit 1156 modulates the work cycle of the control IC, that is, modulates the work frequency fosc, so Tds/T is maintained. So when the output current of the switch power supply is maintained, the control IC enters in the PFM mode.

With the decrease of the load, the value feedback voltage gradually approaches the reference voltage and the error voltage VEA decreases gradually from VDD. When VEA< V 1, the work situation of the pulse width modulating unit 1155 and the frequency modulating unit 1156 is modulated according to the value of the error voltage VEA, and the pulse width modulating unit 1155 operates pulse width modulation and the frequency modulating unit 1156 operates pulse frequency modulation simultaneously, according to negative feedback voltage, the output voltage of the switch power supply is maintained; when the error voltage VEA decreases to V2, the control IC is adjusted to reach a limit, then if the load decreases further, the output voltage of the switch power supply may increase and the error voltage VEA decrease further; when VEA<V4, the mode judging unit 1153 modulates the judging current and the control IC enter in the BURST mode. When the control IC works under the BURST mode, the control IC process frequency division on the basis of the minimum work frequency, if the load increases, the output voltage of the switch power supply decreases, then the error voltage VEA increase; when VEA>V3, the control IC jump out of the BURST mode. There is a delay between V2 and V3. The V1, V2, V3 and V4 decrease successively.

FIG. 4 illustrates a schematic diagram of the change trend of the IC work frequency and primary side winding current corresponding to the load according to one exemplary embodiment of the present invention. Referring to the shadow part, the control IC works under the BURST mode. In this part of the diagram, the control IC works under the PWM mode and PFM mode. When the control IC works under the PWM mode and PFM mode, with the load decrease from heavy to light, the control IC works under PFM mode, then works under PWM mode and then works under the PWM mode and PFM mode. The above mentioned work procedure satisfies the requirement of the dynamic characteristic and decreases the work frequency when the load is light, so the work efficiency may be increased. In the BURST mode, the peek current of the primary side winding IP may be maintained the minimum value, the value of the work frequency is changed to a half of the minimum work frequency when the control IC work under the PFM mode, the loss of the switch power supply and the loss of a fake is decreased, so the loss of the switch power supply with no load may be decreased.

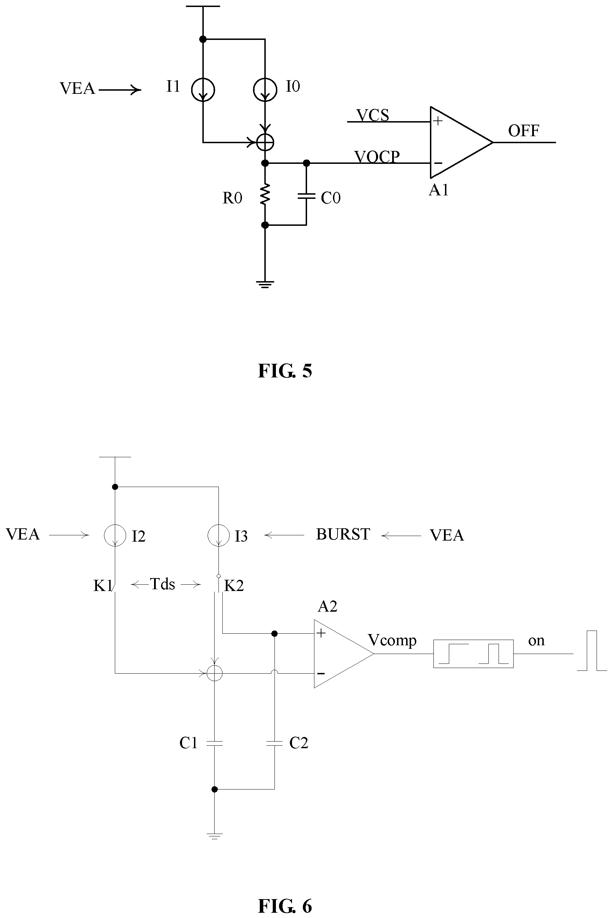

Referring to FIG. 5 and FIG. 6, the mode controlling unit 1153 comprises a first current source, connected with the pulse width modulating unit 1155, configured to increase a value of a first output current I1 when the error voltage increases; and a second current source, connected with the frequency modulating unit 1156, configured to decrease a value of a second output current I2 when the error voltage decreases, stop outputting the second output current when the error voltage is equal to the first preset voltage and maintain the value of the second output current when the error voltage is less than a second preset voltage. When the value of the first reset voltage is VDD, that is when VEA=VDD, 12=0, when the error voltage is less than V4, I2 is maintained.

In FIG. 5, the reference current providing unit is a constant current source and the output voltage of the constant current source is 10. The pulse width modulating unit 1155 comprises a resistor R0, a first capacitor C0 and a first comparator A1, one terminal of the resistor R0 is connected to an output terminal of the first current source, an output terminal of the reference current providing unit, an terminal of the capacitor C0 and an negative terminal of the comparator A1, the other terminal of the resistor R0 is connected to the other terminal of the first capacitor C0 and the ground, an positive terminal of the comparator A1 is connected to the collecting unit. The positive terminal of the comparator A1 is connected to the collecting unit to collect a peak current feedback signal VCS, the negative terminal of the comparator receives a first comparison voltage VOCP, VOCP=RO×(I0+I1).

When the switch power supply is full load or over load, the output voltage of the switch power supply is small, so the collected feedback voltage is small and the error voltage VEA=VDD. The first current is controlled by the error voltage, accordingly, when the error reaches the maximum value, the first current reaches the maximum value and the error voltage reaches the maximum value, and the primary peak current Ip obtained according to the peak current feedback signal is maintained. The turn-on time of the switch is from receiving the turn-on pulse ON for the control signal to receiving the turn-off pulse OFF for the control signal. When the primary peak current Ip is maintained, the time for the first comparator to output the turn-off pulse OFF is constant, so the turn-on duty ratio of the switch is maintained.

When the load of the switch supply decreases to a preset value, the output voltage of the switch power supply increases, and the error voltage VEA decreases from VDD. The first current I1 decreases with the decrease of the error voltage VEA, and the turn-on duty ratio decreases with the decrease of the first current I1, so the output voltage of the switch power supply decreases and a negative feedback is formed. If the load of the switch power supply become heavy but is not the full load, with the increase of the load, the output voltage of the switch power supply decreases and the error voltage VEA increases. The first current I1 increases with the increase of the error voltage VEA, and the turn-on duty ratio increases with the increase of the first current I1, so the output voltage of the switch power supply increases and the output voltage of the switch power supply is maintained to a constant voltage.

FIG. 6 illustrates a schematic diagram method of a PFM/BURST mode according to one exemplary embodiment of the present invention. In some embodiments of the present invention, the mode judging unit 1152 is a third current source. The third current source may reduce the value of a third output current I3 to less than a preset reference current value when the error voltage of the error amplifying module is less than the second preset voltage, and maintain the value of the third output current I3 when the error voltage is equal to or larger than the second preset voltage.

The frequency modulating unit 1156 comprises: a second capacitor C1; a third capacitor C2; a second comparator A2; a first switch K1, of which a first terminal is connected to the output terminal of the second current source and a second terminal is connected to a terminal of the second capacitor C1 and a negative terminal of the second comparator A2, configured to close or open according to the degaussing time signal; and a second switch K2, of which a first terminal is connected to the output terminal of the second current source, a second terminal is connected to a second terminal of the first switch K1, and a third terminal is connected to a terminal of the third capacitor C2 and a positive terminal of the second comparator A2, configured to connect the first terminal and the second terminal of the second switch or to connect the first terminal and the third terminal of the second switch according to the degaussing time signal.

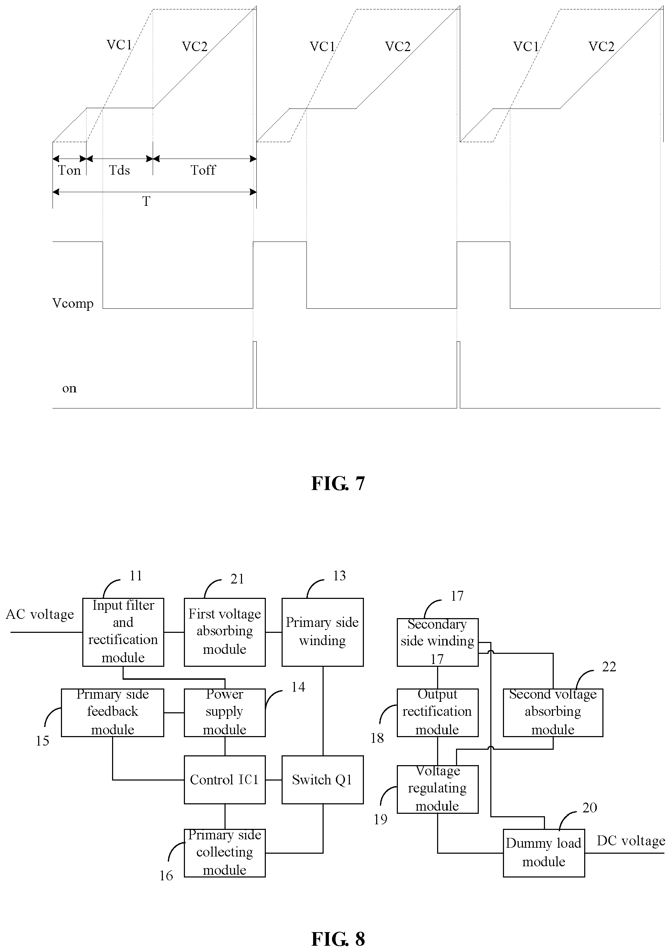

Referring to FIG. 7, in some embodiment of the present invention, the procedure of the PFM/BURST mode comprises four stages:

The first stage: in the beginning of the first cycle T, the second capacitor C1 and the third capacitor C2 are reset.

The second stage: receiving the turn-on pulse ON for the control signal VCOMP, the switch is switched on and the degaussing time signal Tds is low level, the third current source may charge the third capacitor C2 through the third output current 13, the voltage of the third capacitor VC2 increases and the second comparator A2 output the high level.

The third stage: a time Ton is ended, the switch is switched off and the procedure may enter the degaussing stage. The degaussing time signal Tds is high level, the second output current I2 and the third output current I3 charge the second capacitor C1 together, so the voltage of the second capacitor VC1 increase and the voltage of the third capacitor VC2 is maintained. When VC1>VC2, the second comparator A2 turns to low level from high level.

The fourth stage: the degaussing stage is ended, when VC1>VC2, the second comparator A2 outputs low level and the degaussing time signal Tds is low level, the voltage of the second capacitor VC1 is maintained and the third output current I3 charges the third capacitor C2 continuously until VC2>VC1. When VC2>VC1, the second comparator A2 turns to high level from low level and the control signal VCOMP turns to low level from high level and output the turn-on pulse ON, the switch is switched on, and resets the second capacitor C1 and the third capacitor C2. The first cycle is ended.

According to the work procedure mentioned above, some formulas described below are obtained:

$$\Delta Vc1 = \frac{(I2+I3)\cdot Tds}{C1} \quad (2);$$

$$Toff + Ton = \frac{C2\cdot \Delta Vc1}{I3} = \frac{C2(I3+I2)\cdot Tds}{I3\cdot C1} \quad (3);$$

The formula

$$\frac{Tds}{T} = \frac{Tds}{Tds + Ton + Toff} = \frac{I3\cdot C1}{I3\cdot C1 + C2(I3+I2)} \quad (4)$$

is obtained according to formula (2) and (3).

When the switch power supply is full load or over load, the output voltage of the switch power supply is small, so the collected feedback voltage is small and the error voltage VEA=VDD. When VEA=VDD, I2=0, the change of the second current is opposite to the change of VEA, the third current I3 is maintain, so the charge current for the second capacitor C1 and the third capacitor C2 is the same, the formula

$$\frac{Tds}{T} = \frac{C1}{C1+C2} \quad (5)$$

is obtained according to formula (4). That is the value of Tds/T is determined by the ratio of the value of the second capacitor C1 and the third capacitor C2. When the value of the second capacitor C1 and the third capacitor C2 is determined, then when the switch power supply outputs the constant current, the value of Tds/T is maintained.

When the load of the switch supply decreases to a preset value, the output voltage of the switch power supply increases, and the error voltage VEA decreases from VDD. The second current I2 increases with the decrease of the error voltage VEA. According to formula (4), the work cycle T increases make the work frequency fosc of the control IC decreases, and the output energy of the switch power supply decreases and the output voltage of the switch power supply decrease; if the load become heavy, the error voltage decreases. The second current I2 decreases with the increase of the error voltage, and the work frequency fosc of the control IC is increased. So the output voltage of the switch power supply increases and the negative feedback loop is formed to output a constant voltage.

When V2<VEA<V1, the control IC enters in the PWM and PFM mode, the second current I2 is changed with the error voltage VEA. The smaller is the error voltage VEA, the larger is the second current I2. According to formula (4), Tds/T decreases with the decrease of the error voltage VEA, if Tds is maintained, the work cycle T increases with the decrease of the error voltage VEA. That is with the decrease of the error voltage VEA, the work frequency fosc of the control IC is decreased, the purpose of the PFM is achieved.

When VEA<V4, the control IC enters in the BURST mode, the second current I2 is maintained, the value of the third current I3 will jump to a small value and be maintained. According to formula (4), the value of Tds/T may increase further, the work frequency fosc of the control IC decreases further until the control IC jump out of the BURST mode. When VEA<V4, it may be known the switch power supply is light load or no load, the work frequency fosc of the control IC is decreased further, so switch consumption of the switch power supply decreases and the purpose of decreasing the standby power consumption is achieved.

Referring to FIG. 8, a switch power supply comprising: a control IC mentioned above; an input filter and rectification module 11, configured to remove an unwanted frequency from an alternating current (AC) voltage and convert the alternating current (AC) voltage to a direct current (DC) voltage; a switch; a primary side winding 13, configured to convert the DC voltage to a electromagnetic signal under the control of the switch; a power supply module 14, configured to provide a voltage to the control IC; a primary side feedback module 15, configured to divide the voltage of the power supply module and feedback the divided voltage to the control IC; a primary side collecting module16, configured to collect the peak current feedback signal of the switch; a secondary side winding 17, configured to convert the electromagnetic signal to a electric signal and generate an output AC voltage; an output rectification module 18, configured to convert the output AC voltage to a DC voltage; a voltage regulating module 19, configured to store the DC voltage from the output rectification module and provide an output power to maintain the value of the output voltage when the switch is closed; and a dummy load module 20, configured to consume the output AC voltage from the secondary side winding in no-load situation.

The error amplifying module compares the feedback voltage and a reference voltage and output an error voltage, the load situation of the power system may be judged. The frequency and duty ratio of the control signal is controlled according to the load situation of the power system, the degaussing time signal and the peak current feedback signal to make the power system output a constant voltage and current signal, and the work frequency of a control IC may be reduced when in the low load situation. Therefore, the switch loss of the power system is reduced and then the standby power consumption of the power system decreases.

In some embodiment of the present invention, the switch power supply further comprises a first voltage absorbing module 21, connected between the input filter and rectification module and the primary side winding and configured to absorb a peak voltage caused by a leakage inductance to avoid breaking the switch.

In some embodiment of the present invention, the switch power supply further comprises a second voltage absorbing module 22, connected between the secondary side winding and the voltage regulating module and configured to absorb a peak voltage generated during a reverse recovery stage of the output rectification module.

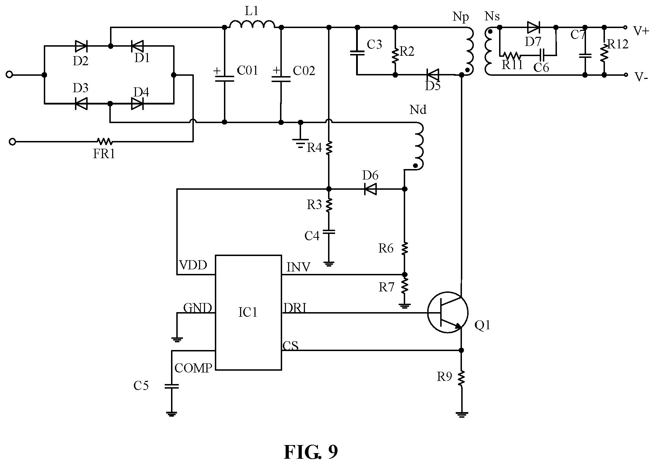

Referring to FIG. 9, the primary side of the switch power supply comprises a primary side winding Np, a switch Q1configured to control the primary side winding Np and the control IC1 configured to control the switch Q1 to turn on or turn off. The switch power supply further comprises a fuse FR1 configured to cute off the AC input to protect the switch

7

power supply when a fault appears. The input filter and rectification module comprises a full wave rectifier and a filter. The full wave rectifier comprises diodes D1-D4, configured to convert the alternating current (AC) voltage to a direct current (DC) voltage. The filter comprises capacitors C01, C02 and inductance L1 configured to remove the unwanted frequency from the AC voltage. The power supply module comprises resistors R3, R4, and capacitor C4, auxiliary winding Nd and a diode D6. The capacitor C4 is charged through R3and R4 and provides the power to the control IC1. When the voltage of the control IC1 reaches a preset start voltage, the switch power supply starts normally, the primary side winding Np starts to store energy until the primary current reaches a certain value. The switch Q1 is switched off when the primary current reaches a certain value. The output voltage by the auxiliary winding Nd is divided by R6 and R7 and the divided voltage is feedback to the control IC1, and the control IC1 sample the voltage of R9 and obtains the peak current feedback signal, so the load situation of the switch power supply may be judged and the work status of the switch may be adjusted. When the switch Q1 is switched off, the energy of Np couples to the output winding Ns, the AC output voltage of Ns is rectified by the output rectification module to a DC voltage. In this embodiment, the output rectification module is a diode D7. The DC voltage output by D7 is stored by the capacitor C7 and provides output voltage when the switch is switched off to maintain the stability of the output voltage. In this embodiment, the dummy load module is resistor R12 configured to consume energy the output winding Ns to maintain the value of the output voltage.

**Claims**

1. A control IC of a switch power supply, connected with a switch of the switch power supply, comprising:

   a voltage collecting module (112), configured to collect a feedback voltage of an output voltage of the switch power supply;
   an error amplifying module (113), configured to compare the feedback voltage and a reference voltage and output an error voltage;
   a time collecting module (114), configured to obtain a degaussing time signal according to the feedback voltage; and
   a control module (115), configured to collect a peak current feedback signal of the switch, control a frequency and duty ratio of a control signal according to the error voltage (VEA), the degaussing time signal (Tds) and the peak current feedback signal (CS), and control the switch according to the control signal, wherein the control module (115) comprises:

      a collecting unit (1151), configured to collect the peak current feedback signal (CS) of the switch;
      a mode judging unit (1152), configured to modulate a value of a judging current according to the error voltage (VEA), wherein the mode judging unit (1152) is a third current source and is configured to reduce a value of a third output current to less than a preset reference current value when the error voltage (VEA) is less than the second preset voltage, and maintain the value of the third output current when the error voltage (VEA) is equal to or larger than the second preset voltage;
      a mode controlling unit (1153), configured to modulate a value of a controlling current according to the error voltage (VEA), wherein the mode controlling unit (1153) comprises:

         a first current source, connected with the pulse width modulating unit (1155) and configured to increase a value of a first output current (II) when the error voltage (VEA) increases; and
         a second current source, connected with the frequency modulating unit (1156) and configured to decrease a value of a second output current (12) when the error voltage (VEA) decreases, stop outputting the second output current when the error voltage (VEA) is equal to a first preset voltage and maintain the value of the second output current when the error voltage (VEA) is less than a second preset voltage;

      a reference current providing unit (1154), configured to provide a preset reference current;
      a pulse width modulating unit (1155), configured to obtain a first comparison voltage by overlapping an output current of the mode controlling unit (1153) and the preset reference current, and output a turn-off pulse for the control signal when the first comparison voltage is equal to the value of the peak current feedback signal (CS); and
      a frequency modulating unit (1156), configured to output a turn-on pulse (ON) for the control signal according to an output current of the mode judging unit (1152), the output current of the mode controlling unit (1153) and the degaussing time signal (Tds), wherein the frequency modulating unit (1156) comprises:

         a second capacitor;

a third capacitor;
a second comparator;
a first switch, of which a first terminal is connected to an output terminal of the second current source and a second terminal is connected to a terminal of the second capacitor and a negative terminal of the second comparator, configured to close or open according to the degaussing time signal (Tds); and
a second switch, of which a first terminal is connected to an output terminal of the second current source, a second terminal is connected to a second terminal of the first switch, and a third terminal is connected to a terminal of the third capacitor and a positive terminal of the second comparator, configured to connect the first terminal and the second terminal of the second switch or to connect the first terminal and the third terminal of the second switch according to the degaussing time signal.

2. The control IC of a switch power supply of claim 1, wherein the reference current providing unit is a constant current source.

3. The control IC of a switch power supply of claim 1, wherein the pulse width modulating unit (1155) comprises a resistor, a first capacitor and a first comparator, one terminal of the resistor is connected to an output terminal of the first current source, an output terminal of the reference current providing unit (1154), an terminal of the capacitor and an negative terminal of the comparator, the other terminal of the resister is connected to the other terminal of the capacitor and is grounded respectively, a positive terminal of the comparator is connected to the collecting unit.

4. The control IC of a switch power supply of anyone of claims 1 to 3, further comprising:
a circuit starting module (111), configured to output an enable signal when a voltage of the circuit starting module (111) reaches a preset start voltage.

5. The control IC of a switch power supply of claim 4, wherein the control module (115) is further configured to output the control signal when receiving the enable signal.

6. The control IC of a switch power supply of anyone of claims 1 to 5, further comprising a compensating module (116), configured to compensate the feedback voltage according to the error voltage (VEA).

7. A switch power supply, comprising:

a control IC of any of claims 1-10;
an input filter and rectification module (11), configured to remove an unwanted frequency from an alternating current (AC) voltage and convert the alternating current (AC) voltage to a direct current (DC) voltage;
a switch;
a primary side winding (13), configured to convert the DC voltage to an electromagnetic signal under a control of the switch;
a power supply module (14), configured to provide a voltage to the control IC;
a primary side feedback module (15), configured to divide the voltage of the power supply module (14) and feedback the divided voltage to the control IC;
a primary side collecting module (16), configured to collect the peak current feedback signal of the switch;
a secondary side winding (17), configured to convert the electromagnetic signal to an electric signal and generate an output AC voltage;
an output rectification module (18), configured to convert the output AC voltage to a DC voltage;
a voltage regulating module (19), configured to store the DC voltage from the output rectification module (18) and provide an output power to maintain the value of the output voltage when the switch is closed; and
a dummy load module (20), configured to consume the output AC voltage from the secondary side winding (17) in no-load situation.

8. The switch power supply of claim 7, further comprising:
a first voltage absorbing module (21), connected between the input filter and rectification module (11) and the primary side winding (13) and configured to absorb a peak voltage caused by a leakage inductance.

9. The switch power supply of claim 7 or 8, further comprising:
a second voltage absorbing module (22), connected between the secondary side winding (17) and the voltage regulating module (19) and configured to absorb a peak voltage generated during a reverse recovery stage of the output rectification module (18).

**Patentansprüche**

1. Integrierter Steuerschaltkreis eines Schaltnetzteils, der mit einem Schalter des Schaltnetzteils verbunden ist, umfassend:

ein Spannungssammelmodul (112), das konfiguriert ist, um eine Rückkopplungsspannung einer Ausgangsspannung des Schaltnetzteils zu sammeln;
ein Fehlerverstärkungsmodul (113), das konfiguriert ist, um die Rückkopplungsspannung und eine Referenzspannung zu vergleichen und eine Fehlerspannung auszugeben;
ein Zeiterfassungsmodul (114), das konfiguriert ist, um ein Entmagnetisierungszeitsignal gemäß der Rückkopplungsspannung zu erhalten; und
ein Steuermodul (115), das konfiguriert ist, um ein Spitzenstromrückkopplungssignal des Schalters zu sammeln, eine Frequenz und ein Tastverhältnis eines Steuersignals gemäß der Fehlerspannung (VEA), dem Entmagnetisierungszeitsignal (Tds) und dem Spitzenstromrückkopplungssignal (CS) zu steuern und um den Schalter gemäß dem Steuersignal zu steuern, wobei das Steuermodul (115) umfasst:

eine Sammeleinheit (1151), die konfiguriert ist, um das Spitzenstromrückkopplungssignal (CS) des Schalters zu sammeln;
eine Modusbeurteilungseinheit (1152), die konfiguriert ist, um einen Wert eines Beurteilungsstroms gemäß der Fehlerspannung (VEA) zu modulieren, wobei die Modusbeurteilungseinheit (1152) eine dritte Stromquelle ist und dazu konfiguriert ist, einen Wert eines dritten Ausgangsstroms auf kleiner als ein voreingestellter Referenzstromwert zu reduzieren, wenn die Fehlerspannung (VEA) kleiner ist als die zweite voreingestellte Spannung, und den Wert des dritten Ausgangsstroms beizubehalten, wenn die Fehlerspannung (VEA) gleich oder größer ist als die zweite voreingestellte Spannung;
eine Modussteuereinheit (1153), die konfiguriert ist, um einen Wert eines Steuerstroms gemäß der Fehlerspannung (VEA) zu modulieren, wobei die Modussteuereinheit (1153) umfasst:

eine erste Stromquelle, die mit der Pulsbreitenmodulationseinheit (1155) verbunden ist und konfiguriert ist, um einen Wert eines ersten Ausgangsstroms (11) zu erhöhen, wenn die Fehlerspannung (VEA) ansteigt; und
eine zweite Stromquelle, die mit der Frequenzmodulationseinheit (1156) verbunden ist und konfiguriert ist, um einen Wert eines zweiten Ausgangsstroms (12) zu verringern, wenn die Fehlerspannung (VEA) abnimmt, um die Ausgabe des zweiten Ausgangsstroms zu stoppen, wenn die Fehlerspannung (VEA) gleich ist einer ersten voreingestellten Spannung, und um den Wert des zweiten Ausgangsstroms beizubehalten, wenn die Fehlerspannung (VEA) kleiner ist als eine zweite voreingestellte Spannung;
eine Referenzstrombereitstellungseinheit (1154), die konfiguriert ist, um einen voreingestellten Referenzstrom bereitzustellen;
eine Pulsbreitenmodulationseinheit (1155), die konfiguriert ist, um eine erste Kompensationsspannung durch Überlappen eines Ausgangsstroms der Modussteuereinheit (1153) und des voreingestellten Referenzstroms zu erhalten und um einen Ausschaltimpuls für das Steuersignal auszugeben, wenn die erste Vergleichsspannung gleich ist dem Wert des Spitzenstromrückkopplungssignals (CS); und
eine Frequenzmodulationseinheit (1156), die konfiguriert ist, um einen Einschaltimpuls (ON) für das Steuersignal gemäß einem Ausgangsstrom der Modusbeurteilungseinheit (1152), dem Ausgangsstrom der Modussteuereinheit (1153) und dem Entmagnetisierungszeitsignal (Tds) auszugeben, wobei die Frequenzmodulationseinheit (1156) umfasst:

einen zweiten Kondensator;
einen dritten Kondensator;
einen zweiten Komparator;
einen ersten Schalter, von dem ein erster Anschluss mit einem Ausgangsanschluss der zweiten Stromquelle verbunden ist und ein zweiter Anschluss mit einem Anschluss des zweiten Kondensators und einem negativen Anschluss des zweiten Komparators verbunden ist, wobei er so konfiguriert ist, um gemäß dem Entmagnetisierungszeitsignal (Tds) zu schließen oder zu öffnen ;und
einen zweiten Schalter, von dem ein erster Anschluss mit einem Ausgangsanschluss der zweiten Stromquelle verbunden ist, ein zweiter Anschluss mit einem zweiten Anschluss des ersten Schalters verbunden ist und ein dritter Anschluss mit einem Anschluss des dritten Kondensators und einem positiven Anschluss des zweiten Komparators verbunden ist, wobei er so konfiguriert ist, um gemäß dem Entmagnetisierungszeitsignal den ersten Anschluss und den zweiten Anschluss des zweiten Schalters zu verbinden oder den ersten Anschluss und den dritten Anschluss des zweiten Schalters zu verbinden.

2. Integrierter Steuerschaltkreis eines Schaltnetzteils nach Anspruch 1, wobei die Referenzstrombereitstellungseinheit eine Konstantstromquelle ist.

3. Integrierter Steuerschaltkreis eines Schaltnetzteils nach Anspruch 1, wobei die Pulsbreitenmodulationseinheit (1155) einen Widerstand, einen ersten Kondensator und einen ersten Komparator umfasst, wobei ein Anschluss des Widerstands mit einem Ausgangsanschluss der ersten Stromquelle, einem Ausgangsanschluss der Referenzstrombereitstellungseinheit (1154), einem Anschluss des Kondensators und einem negativer Anschluss des Komparators verbunden ist, der andere Anschluss des Widerstands mit dem anderen Anschluss des Kondensators verbunden ist und jeweils geerdet ist, wobei ein positiver Anschluss des Komparators mit der Sammeleinheit verbunden ist.

4. Integrierter Steuerschaltkreis eines Schaltnetzteils nach einem der Ansprüche 1 bis 3, des Weiteren umfassend: ein Schaltkreisstartmodul (111), das konfiguriert ist, um ein Freigabesignal auszugeben, wenn eine Spannung des Schaltkreisstartmoduls (111) eine voreingestellte Startspannung erreicht.

5. Integrierter Steuerschaltkreis eines Schaltnetzteils nach Anspruch 4, wobei das Steuermodul (115) ferner konfiguriert ist, um das Steuersignal auszugeben, wenn das Freigabesignal empfangen wird.

6. Integrierter Steuerschaltkreis eines Schaltnetzteils nach einem der Ansprüche 1 bis 5, ferner umfassend ein Kompensationsmodul (116), das konfiguriert ist, um die Rückkopplungsspannung gemäß der Fehlerspannung (VEA) zu kompensieren.

7. Schaltnetzteil, umfassend:

einen integrierten Steuerschaltkreis nach einem der Ansprüche 1-10;
ein Eingangsfilter- und Gleichrichtungsmodul (11), das konfiguriert ist, um eine unerwünschte Frequenz von einer Wechselstromspannung (AC-Spannung) zu entfernen und die Wechselstromspannung (AC-Spannung) in eine Gleichstromspannung (DC-Spannung) umzuwandeln;
einen Schalter;
eine primärseitige Wicklung (13), die so konfiguriert ist, dass sie die Gleichspannung unter einer Steuerung des Schalters in ein elektromagnetisches Signal umwandelt;
ein Stromversorgungsmodul (14), das konfiguriert ist, um dem integrierten Steuerschaltkreis eine Spannung bereitzustellen;
ein primärseitiges Rückkopplungsmodul (15), das so konfiguriert ist, dass es die Spannung des Stromversorgungsmoduls (14) teilt und die geteilte Spannung an den integrierten Steuerschaltkreis zurückgibt;
ein primärseitiges Sammelmodul (16), das konfiguriert ist, um das Spitzenstromrückkopplungssignal des Schalters zu sammeln;
eine sekundärseitige Wicklung (17), die konfiguriert ist, um das elektromagnetische Signal in ein elektrisches Signal umzuwandeln und eine Ausgangs-Wechselspannung zu erzeugen;
ein Ausgangsgleichrichtungsmodul (18), das so konfiguriert ist, dass es die Ausgangs-Wechselspannung in eine Gleichspannung umwandelt;
ein Spannungsregelungsmodul (19), das konfiguriert ist, um die Gleichspannung vom Ausgangsgleichrichtungsmodul (18) zu speichern und einen Ausgangsstrom bereitzustellen, um den Wert der Ausgangsspannung beizubehalten, wenn der Schalter geschlossen ist; und
ein Dummy-Lademodul (20), das so konfiguriert ist, um die Ausgangs-Wechselspannung von der sekundärseitigen Wicklung (17) im Leerlauf zu verbrauchen.

8. Schaltnetzteil nach Anspruch 7, des Weiteren umfassend: ein erstes spannungsabsorbierendes Modul (21), das zwischen dem Eingangsfilter- und Gleichrichtungsmodul (11) und der primärseitigen Wicklung (13) geschaltet ist und dazu konfiguriert ist, um eine durch eine Streuinduktivität verursachte Spitzenspannung zu absorbieren.

9. Schaltnetzteil nach Anspruch 7 oder 8, des Weiteren umfassend: ein zweites spannungsabsorbierendes Modul (22), das zwischen der sekundärseitigen Wicklung (17) und dem Spannungsregelungsmodul (19) angeschlossen ist und konfiguriert ist, um eine während einer Rückgewinnungs-Rückwärtsstromstufe des Ausgangsgleichrichtungsmoduls (18) erzeugte Spitzenspannung zu absorbieren.

**Revendications**

1. Circuit intégré de commande d'une alimentation électrique à commutation, connecté à un interrupteur de l'alimentation électrique à commutation, comprenant :

    un module de collecte de tension (112), configuré pour collecter une tension de rétroaction d'une tension de sortie de l'alimentation électrique à commutation,
    un module d'amplification d'erreur (113), configuré pour comparer la tension de rétroaction et une tension de référence et émettre une tension d'erreur ;
    un module de collecte temporelle (114), configuré pour obtenir un signal temporel de démagnétisation selon la tension de rétroaction ; et
    un module de commande (115), configuré pour collecter un signal de rétroaction de pic de courant de l'interrupteur, commander une fréquence et un rapport cyclique d'un signal de commande selon la tension d'erreur (VEA), le signal temporel de démagnétisation (Tds) et le signal de rétroaction de pic de courant (CS) et commander le commutateur selon le signal de commande, dans lequel le module de commande (115) comprend :

        une unité de collecte (1151), configurée pour collecter le signal de rétroaction de pic de courant (CS) du commutateur ;
        une unité d'estimation de mode (1152), configurée pour moduler une valeur d'un courant d'estimation selon la tension d'erreur (VEA), dans lequel l'unité d'estimation de mode (1152) est une troisième source de courant et est configurée pour régler une valeur d'un troisième courant de sortie à moins d'une valeur de courant de référence préréglée lorsque la tension d'erreur (VEA) est inférieure à la seconde tension préréglée et maintenir la valeur du troisième courant de sortie lorsque la tension d'erreur (VEA) est égale ou supérieure à la seconde tension préréglée ;
        une unité de commande de mode (1153), configurée pour moduler une valeur d'un courant de commande selon la tension d'erreur (VEA), dans lequel l'unité de commande de mode (1153) comprend :

            une première source de courant, connectée à l'unité de modulation de largeur d'impulsion (1155) et configurée pour augmenter une valeur d'un premier courant de sortie (II) lorsque la tension d'erreur (VEA) augmente ; et
            une seconde source de courant, connectée à l'unité de modulation de fréquence (1156) et configurée pour diminuer une valeur d'un second courant de sortie (12) lorsque la tension d'erreur (VEA) diminue, arrêter d'émettre le second courant de sortie lorsque la tension d'erreur (VEA) est égale à une première tension préréglée et maintenir la valeur du second courant de sortie lorsque la tension d'erreur (VEA) est inférieure à une seconde tension préréglée,
            une unité de fourniture de courant de référence (1154), configurée pour fournir un courant de référence préréglé ;
            une unité de modulation de largeur d'impulsion (1155), configurée pour obtenir une première tension de comparaison en superposant un courant de sortie de l'unité de commande de mode (1153) et le courant de préférence réglé et émettre une impulsion de coupure pour le signal de commande lorsque la première tension de comparaison est égale à la valeur du signal de rétroaction de pic de courant (CS) ; et
            une unité de modulation de fréquence (1156), configurée pour émettre une impulsion d'amorçage (ON) pour le signal de commande selon un courant de sortie de l'unité d'estimation de mode (1152), le courant de sortie de l'unité de commande de mode (1153) et le signal temporel de démagnétisation (Tds), dans lequel l'unité de modulation de fréquence (1156) comprend :

                un second condensateur ;
                un troisième condensateur ;
                un second comparateur :

                    un premier commutateur, dont une première borne est connectée à une borne de sortie de la seconde source de courant et une seconde borne est connectée à une borne du second condensateur et une borne négative du second comparateur, configurée pour se fermer ou s'ouvrir selon le signal de temporisation de démagnétisation (Tds) ; et
                    un second commutateur, dont une première borne est connectée à une borne de sortie de la seconde source de courant, une seconde borne est connectée à une seconde borne du premier commutateur et une troisième borne est connectée à une borne du troisième condensateur et une borne positive du second comparateur, configuré pour connecter la première borne et la seconde borne du second commutateur et la première borne et la troisième borne du second commutateur selon le signal temporel de démagnétisation.

**2.** Circuit intégré de commande d'une alimentation électrique à commutation selon la revendication 1, dans lequel l'unité de fourniture de courant de référence est une source de courant constant.

**3.** Circuit intégré de commande d'une alimentation électrique à commutation selon la revendication 1, dans lequel l'unité de modulation de largeur d'impulsion (1155) comprend une résistance, un premier condensateur et un premier comparateur, une borne de la résistance est connectée à une borne de sortie de la première source de courant, une borne de sortie de l'unité de fourniture de courant de référence (1154), une borne du condensateur et une borne négative du comparateur, l'autre borne de la résistance est connectée à l'autre borne du condensateur et est mise à la terre respectivement, une borne positive du comparateur est connectée à l'unité de collecte.

**4.** Circuit intégré de commande d'une alimentation électrique à commutation selon une quelconque des revendications 1 à 3, comprenant en outre :
un module de démarrage de circuit (111), configuré pour émettre un signal d'activation lorsqu'une tension du module de démarrage de circuit (111) atteint une tension de démarrage préréglée.

**5.** Circuit intégré de commande d'une alimentation électrique à commutation selon la revendication 4, dans lequel le module de commande (115) est en outre configuré pour émettre le signal de commande lors de la réception du signal d'activation.

**6.** Circuit intégré de commande d'une alimentation électrique à commutation selon une quelconque des revendications 1 à 5, comprenant en outre un module de compensation (116) configuré pour compenser la tension de rétroaction selon la tension d'erreur (VEA).

**7.** Alimentation électrique à commutation, comprenant :

un circuit intégré de commande selon une quelconque des revendications 1-10 ;
un module de redressement et de filtrage d'entrée (11), configuré pour supprimer une fréquence non souhaitée d'une tension de courant alternatif (CA) et convertir la tension de courant alternatif (CA) en une tension de courant continu (CC) ;
un commutateur ;
un enroulement du côté primaire (13), configuré pour convertir la tension CC en un signal électromagnétique sous une supervision du commutateur ;
un module d'alimentation électrique (14), configuré pour fournir une tension au circuit intégré de commande ;
un module de rétroaction du côté primaire (15), configuré pour diviser la tension du module d'alimentation électrique (14) et réinjecter la tension divisée dans le circuit intégré de commande ;
un module de collecte du côté primaire (16), configuré pour collecter le signal de rétroaction de pic de courant du commutateur ;
un enroulement du côté secondaire (17), configuré pour convertir le signal électromagnétique en un signal électrique et générer une tension CA de sortie ;
un module de redressement de sortie (18), configuré pour convertir la tension de sortie CA en une tension CC ;
un module de régulation de tension (19), configuré pour mémoriser la tension CC provenant du module de redressement de sortie (18) et fournir une puissance de sortie afin de maintenir la valeur de la tension de sortie lorsque le commutateur est fermé ; et
un module de charge fictive (20), configuré pour consommer la tension de sortie CA provenant de l'enroulement du côté secondaire (17) dans une situation de non charge.

**8.** Alimentation électrique à commutation selon la revendication 7, comprenant en outre :
un premier module d'absorption de tension (21), connectée entre le module de redressement et de filtrage d'entrée (11) et l'enroulement du côté primaire (13) et configuré pour absorber une tension de pic provoquée par une inductance de fuite.

**9.** Alimentation électrique à commutation selon la revendication 7 ou 8, comprenant en outre :
un second module d'absorption de tension (22), connecté entre l'enroulement du côté secondaire (17) et le module de régulation de tension (19) et configuré pour absorber une tension de pic générée pendant un stade de récupération inverse du module de redressement de sortie (18).

**FIG. 1**

**FIG. 2**

**FIG. 3**

**FIG. 4**

VEA ⟶

I1   I0

VCS   +

VOCP   −   OFF

R0   C0   A1

**FIG. 5**

VEA ⟶   I2   I3 ⟵ BURST ⟵ VEA

K1   ⟵Tds⟶   K2

A2

+

Vcomp   on

−

C1   C2

**FIG. 6**

VC1　VC2　　　　VC1　VC2　　　　VC1　VC2

Ton　Tds　Toff

T

Vcomp

on

**FIG. 7**

AC voltage

Input filter and rectification module　11

First voltage absorbing module　21

Primary side winding　13

Secondary side winding　17

17

Primary side feedback module　15

Power supply module　14

Output rectification module　18

Second voltage absorbing module　22

Control IC1

Switch Q1

Voltage regulating module　19

Primary side collecting module　16

Dummy load module　20

DC voltage

**FIG. 8**

FIG. 9

**EP 2 737 617 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100208500 A